Europäisches Patentamt

European Patent Office

Office européen des brevets

(19)

(11) **EP 0 705 458 B1**

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(21) Anmeldenummer: **94916893.4**

(22) Anmeldetag: **08.06.1994**

(51) Int Cl.$^6$: **G06F 7/00**

(86) Internationale Anmeldenummer:
**PCT/DE94/00644**

(87) Internationale Veröffentlichungsnummer:
**WO 95/00899 (05.01.1995 Gazette 1995/02)**

(54) **VORRICHTUNG ZUR DIREKTEN VERARBEITUNG VON LINGUISTISCHEN NICHT- UND ODER-OPERATOREN IN EINEM FUZZY-INFERENCE-PROZESSOR**

DEVICE FOR THE DIRECT PROCESSING OF LINGUISTIC NOT AND OR OPERATORS IN A FUZZY INFERENCE PROCESSOR

DISPOSITIF DE TRAITEMENT DIRECT D'OPERATEURS LINGUISTIQUES NON-ET-OU DANS UN PROCESSEUR D'INFERENCE A LOGIQUE FLOUE

(84) Benannte Vertragsstaaten:
**DE FR GB IT**

(30) Priorität: **22.06.1993 DE 4320697**

(43) Veröffentlichungstag der Anmeldung:
**10.04.1996 Patentblatt 1996/15**

(73) Patentinhaber: **SIEMENS AKTIENGESELLSCHAFT
80333 München (DE)**

(72) Erfinder:
• **KÜNEMUND, Thomas
D-80337 München (DE)**
• **HENTSCHEL, Klaus
D-84028 Landshut (DE)**

(56) Entgegenhaltungen:
• **FUZZY SETS AND SYSTEMS, Bd.34, Nr.3, 26. Februar 1990, AMSTERDAM NL Seiten 293 - 299, XP000276744 M. SCHNEIDER ET AL. 'APPLICATIONS OF THE NEGATION OPERATOR IN FUZZY PRODUCTION RULES'**
• **IEEE INTERNATIONAL CONFERENCE ON FUZZY SYSTEMS, 8-12 MARCH 1992, SAN DIEGO, CA., USA, 1992, IEEE, NEW YORK, NY, USA. Seiten 1317 - 1323, XP000343007 H. EICHFELD ET AL. 'Architecture of a CMOS Fuzzy Logic Controller with optimized memory organisation and operator design'**

**Beschreibung**

Vorrichtung zur direkten Verarbeitung von linguistischen NICHT- und ODER-Operatoren in einem Fuzzy-Inference-Prozessor.

In vielen Fällen werden in Fuzzy-Regeln für eine effiziente Beschreibung NICHT- Operatoren benötigt, um beispielsweise Aussagen wie "wenn die Raumtemperatur NICHT warm ist, dann muß die Heizung aufgedreht werden" zu treffen.

Sind zum Beispiel die linguistischen Eingangsvariablen A und B gegeben und kann A die linguistischen Werte AO ... A2 und B die linguistischen Werte BO ... B2 annehmen, so sind beispielsweise für eine Regel mit zwei negierten Eingangsvariablen, wie

**if not** $(A = AO)$ **and not** $(B = BO)$ **then** $V = V1$ bzw.
**if** $A = not (A0)$ **and** $B = not (B0)$ **then** $V = V1$

ersatzweise die folgenden Regeln ohne NICHT-Operatoren

**if** $A = A1$ **and** $B = B1$ **then** $V = V1$
**if** $A = A2$ **and** $B = B1$ **then** $V = V1$
**if** $A = A1$ **and** $B = B2$ **then** $V = V1$
**if** $A = A2$ **and** $B = B2$ **then** $V = V1$

erforderlich, wobei V die linguistische Ausgangsvariable und V1 einen linguistischen Wert der Ausgangsvariablen darstellt.

Wenn man die Anzahl der in der Regel verwendeten NICHT-Operatoren mit $n_{NOT}$ und die Anzahl der linguistischen Werte der Eingangsvariablen mit $n_{LW}$ bezeichnet, läßt sich die Regeleinsparung in diesem Fall durch den Faktor $(n_{LW - 1})^{n_{NOT}}$ angeben.

Das Dokument 'FUZZY SETS AND SYSTEMS', Bd. 34, Nr. 3, 26. Februar 1990, AMSTERDAM, NL ; Seiten 293 - 299, M. SCHNEIDER ET AL. 'APPLICATIONS OF THE NEGATION OPERATOR IN FUZZY PRODUCTION RULES' beschreibt die Eigenschaften eines Nicht-Operators. Das konzept 'set-complementation', und seine Anwendung in Fällen von Logischer Widersprüchlichkeit werden vorgestellt.

Das Dokument 'IEEE INTERNATIONAL CONFERENCE ON FUZZY SYSTEMS, 8-12 MARCH 1992, SAN DIEGO, CA., USA, 1992, IEEE, NEW YORK, NY, USA ; Seiten 1317 - 1323 ; H. EICHFELD ET AL, 'Architecture of a CMOS Fuzzy Logic Controller with optimized memory organisation and operator design' beschreibt eine 'fuzzy logic control unit' in einem Mehrzweck-Kontroller.

Die der Erfindung zugrundeliegende Aufgabe besteht nun darin, eine Vorrichtung für einen Fuzzy-Logic-Prozessor anzugeben, bei der neben einzelnen nicht negiert auftretenden linguistischen Werten von Eingangsvariablen auch negierte linguistische Werte der Eingangsvariablen direkt, also ohne vorherige Auflösung in mehrere Regeln mit einzelnen nicht negiert auftretenden linguistischen Werten der Eingangsvariablen verarbeitbar sind, um, insbesondere bei umfangreichen linguistischen Protokollen, Speicherplatz bzw. Chipfläche und Rechenzeit zu sparen.

Diese Aufgabe wird erfindungsgemäß durch die Merkmale des Patentanspruchs 1 gelöst.

Vorteilhafte Ausgestaltungen der Erfindung ergeben sich aus den Unteransprüchen 2 bis 6, wobei beim Anspruch 2 ein Negationsbit durch ein linksseitiges und ein rechtsseitiges Negationsbit und eine Nummer für einen weiteren linguistischen Wert in der jeweiligen Regel ersetzt ist, um beispielsweise ODER-verknüpfte aufeinanderfolgende lingustische Werte einer einzelnen Eingangsvariablen ebenfalls direkt, also ohne vorherige Auflösung in mehrere Regeln mit einzelnen nicht negiert auftretenden linguistischen Werten der Eingangsvariablen, verarbeiten zu können.

Die Erfindung wird nachfolgend anhand der Zeichnung näher erläutert. Dabei zeigt

| | |
|---|---|
| Figur 1 | eine Gesamtschaltung mit zwei gleichartigen erfindungsgemaßen Vorrichtungen, einer Fuzzifikationsschaltung, einem Wissensbasisspeicher und einer Regelauswerteschaltung, |
| Figur 2 | einen ersten Teil der erfindungsgemaßen Vorrichtung, |
| Figur 3 | einen zweiten Teil der erfindungsgemaßen Vorrichtung, |
| Figur 4 bis 6 | Zugehörigkeitsfunktionsdiagramme zur Erläuterung der Funktionsweise der erfindungsgemaßen Vorrichtung und |
| Figur 7 | eine Schaltung einer weiteren erfindungsgemäßen Vorrichtung. |

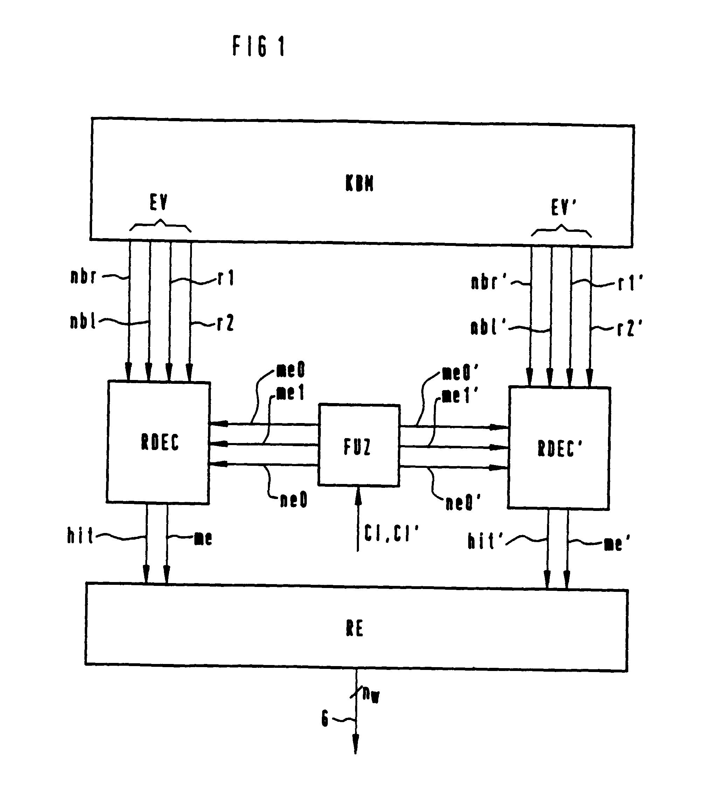

In Figur 1 ist ein Teil eines Fuzzy-Logic-Prozessors gezeigt, der zwei erfindungsgemäße Vorrichtungen in Form von Regeldekodern RDEC und RDEC', eine Fuzzifikationsschaltung FUZ, einen Wissensbasisspeicher KBM und eine Regelauswerteschaltung RE enthält. In der Fuzzifikationsschaltung FUZ werden aus zwei scharfen Eingangswerten CI, CI' für den Regeldekoder RDEC eine Nummer ne0 für einen unteren getroffenen linguistischen Wert einer Eingangsvariablen EV, ein Wert me0 der Zugehörigkeit 5-funktion des unteren getroffenen linguistischen Wertes der Eingangsvariablen und ein Wert me1 der zugehörigkeitsfunktion eines oberen getroffenen linguistischen Wertes sowie für den zweiten Regeldekoder RDEC' eine Nummer ne0' für den unteren getroffenen linguistischen Wert einer weiteren Eingangsvariablen EV', ein Wert me0' der zugehörigkeitsfunktion des unteren getroffenen linguistischen Wertes der weiteren Eingangsvariablen und ein Wert me1' der Zugehörigkeitsfunktion eines oberen getroffenen linguistischen Wertes der weiteren Eingangsvariablen gebildet. An dieser Stelle sei erwähnt, daß sich bei den erfindungsgemäßen Vorrichtungen zwar immer nur maximal zwei Zugehörigkeitsfunktionen, nämlich eine Zugehörigkeitsfunktion eines unteren linguistischen Wertes und eine Zugehörigkeitsfunktion eines oberen linguistischen Wertes, überlappen aber prinzipiell auch ein höherer Überlappungsgrad möglich ist. Ferner sei erwähnt, daß ein linguistischer Wert "getroffen" ist, wenn die ihm entsprechende Zugehörigkeitsfunktion für den jeweiligen scharfen Eingangswert einen Wert ungleich Null annimmt. Neben den Signalen ne0, me0 und me1 werden dem Regeldekoder RDEC aus dem Wissensbasisspeicher KBM kommend für die Eingangsvariable EV ein rechtsseitiges Negationsbit nbr, ein linksseitiges Negationsbit nbl und zwei Nummern r1, r2 für Zugehörigkeitsfunktionen der Eingangsvariablen EV zugeführt. In entsprechender Weise geschieht dies beim Regeldekoder RDEC', dem zusätzlich zu den Signalen neo', meo' und mel' das rechtsseitige Negationsbit nbr', das linksseitige Negationsbit nbl' und zwei Nummern rl', r2' für Zugehörigkeitsfunktionen der weiteren Eingangsvariablen EV' zugeführt werden. In der erfindungsgemäßen Vorrichtung, dem Regeldekoder RDEC, wird aus den genannten Eingangssignalen ein Treffersignal hit erzeugt, das angibt, ob der Bedingungsteil der jeweiligen Regel hinsichtlich der Eingangsvariablen EV erfüllt ist oder nicht, sowie derjenige Ausgangswert me einer Zugehörigkeitsfunktion eines linguistischen Wertes der Eingangsvariablen EV, der aus dem Bedingungsteil resultiert. In entsprechender Weise wird im weiteren Regeldekoder RDEC' ein Treffersignal hit' und ein Ausgangssignal me' einer Zugehörigkeitsfunktion eines aus dem Bedingungsteil resultierenden linguistischen Wertes der Eingangsvariablen EV' gebildet. In der Regelausworteschaltung RE werden jeweils zwei Ausgangswerte me, me' für die Eingangsvariablen EV, EV', beispielsweise durch eine Minimumbildung, unscharf UND-verknüpft, sofern das Treffersignal hit bzw. hit' anzeigt, daß der jeweilige Wert me bzw. me' zu berücksichtigen ist. Das jeweilige Ergebnis der UND-Verknüpfung wird gespeichert und eventuell mit den nächsten beiden Eingangsvariablen wiederum unscharf UND-verknüpft bis der Bedingungsteil einer Regel auf diese Weise abgearbeitet ist. Dies erfolgt für alle Regeln eines im Wissensbasisspeicher KBM gespeicherten Regelsatzes. Ferner werden in der Regelausworteschaltung RE jeweils alle Regeln die den gleichen linguistischen Wert der Ausgangsvariablen enthalten, beispielsweise durch Maximumbildung, unscharf zu $n_{LW}$ Gewichtungsfaktoren G ODER-verknüpft, wobei $n_{LW}$ die Anzahl der linguistischen Werte der Ausgangsvariablen darstellt. der Ausgangsvariablen darstellt.

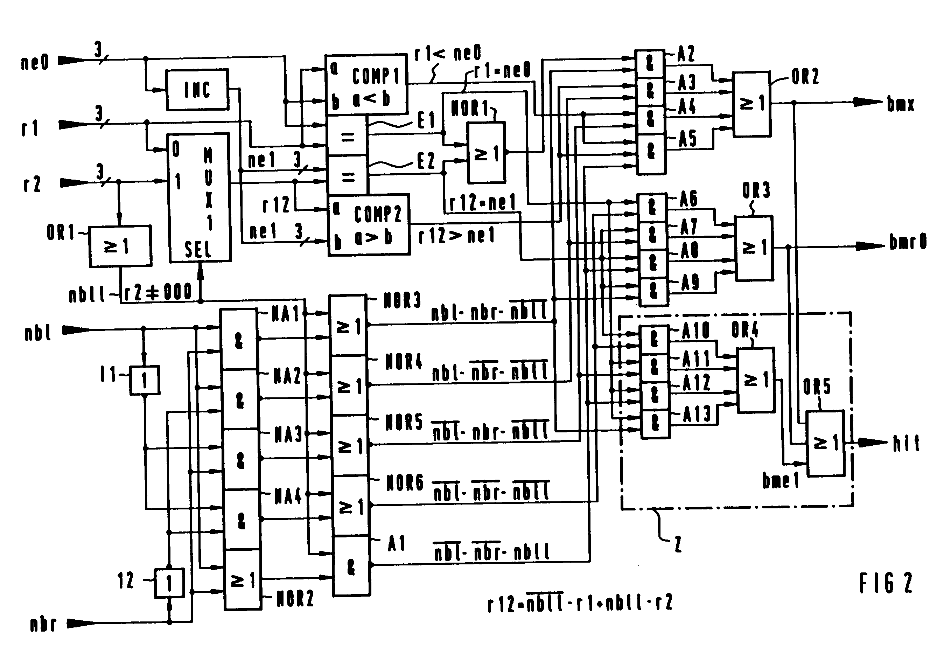

In Figur 2 ist eine vorteilhafte Ausgestaltung eines ersten Teiles einer erfindungsgemäßen Vorrichtung gezeigt, in der für den zweiten Teil der erfindungsgemäßen Vorrichtung erforderliche Steuersignale bmx, bme0 erzeugbar sind. Hierzu ist eine Vierfach-ODER-Schaltung OR2 vorgesehen, an deren Ausgang das Steuersignal bmx und an deren Eingängen der Reihe nach jeweils ein Ausgang einer von vier UND-Schaltungen A2 ... A5 anliegt. Ein erster Eingang der UND-Schaltung A2 ist mit dem Ausgang einer NOR-Schaltung NOR1 und der zweite Eingang der UND-Schaltung A2 ist mit dem Ausgang einer NOR-Schaltung NOR3 verbunden. Ein erster Eingang der UND-Schaltung A3 ist mit dem Ausgang eines Größer-Komparators COMP2 mit der Vergleichsbedingung a > b und ein zweiter Eingang der UND-Schaltung A3 ist mit dem Ausgang einer NOR-Schaltung NOR4 verbunden. Ein erster Eingang der UND-Schaltung A4 ist mit dem Ausgang eines Kleiner-Komparators COMP1 mit der Vergleichsbedingung a < b und ein zweiter Eingang der UND-Schaltung A4 ist mit dem Ausgang einer NOR-Schaltung NOR5 beschaltet. Ein erster Eingang der UND-Schaltung A5 ist mit dem Ausgang des Komparators COMP1, ein zweiter Eingang der UND-Schaltung A5 mit dem Ausgang des Komparators COMP2 und ein dritter Eingang der UND-Schaltung A5 mit dem Ausgang einer UND-Schaltung Al beschaltet. Der a-Eingang des Komparators COMP1 ist mit der Nummer r1 und der b-Eingang des Komparators COMP1 mit der Nummer ne0 beschaltet, woraus sich am Ausgang des Komparators COMP1 die Bedingung r1 < ne0 ergibt. Ein erster Eingang der NOR-Schaltung NOR1 ist mit dem Ausgang einer Identitätsvergleicherschaltung E1 verbunden, deren erster Eingang die Nummer ne0 und der zweiter Eingang die Nummer r1 erhält. Der zweite Eingang der NOR-Schaltung NOR1 ist mit dem Ausgang einer weiteren Identitätsvergleicherschaltung E2 verbunden, deren erster Eingang eine Nummer nel und deren zweiter Eingang das Ausgangssignal r12 eines Multiplexers MUX1 erhält. Die Nummer nel stellt das Ausgangssignal einer Inkrementierschaltung INC dar, deren Eingang mit der Nummer ne0 beschaltet ist, wobei sich die Nummer ne1 zu ne1 = ne0 + 1 ergibt. Am a-Eingang des Komparators COMP2 liegt das Ausgangssignal r12 des Multiplexers MUX1 und am b-Eingang des Komparators COMP2 liegt die Nummer nel. Der Null-Eingang des Multiplexer MUX1 ist mit der Nummer r1 und der Eins-Eingang des Multiplexers MUX1 ist mit der Nummer r2 beschaltet. Die einzelnen Bits der Nummer r2, beispielsweise drei Bits, sind durch eine ODER-Schaltung OR1 zu einem Signal nbll verknüpfbar, das der Bedingung r2 ungleich 0 entspricht und unter anderem ein Auswahlsignal sel für den Multiplexer MUX1 darstellt. Die jeweiligen ersten Eingänge der NOR-Schaltungen NOR3 ... NOR6 und der UND-Schaltung Al sind ebenfalls mit dem Ausgangssignal nbll der ODER-Schaltung OR1 beschaltet. Der zweite Eingang der NOR-Schaltung NOR3 ist mit dem Ausgang einer NAND-Schaltung NA1, der zweite Eingang der NOR-Schaltung NOR4 mit dem Ausgang einer NAND-Schaltung NA2, der zweite Eingang der NOR-Schaltung NOR5 mit dem Ausgang einer NAND-Schaltung NA3, der zweite Eingang der NOR-Schaltung NOR6 mit dem Ausgang einer NAND-Schaltung NA4 und der zweite Eingang der UND-Schaltung Al mit dem Ausgang einer NOR-Schaltung NOR2 beschaltet. Ein jeweiliger erster Eingang der NAND-Schaltung NA1, der NAND-Schaltung NA2 und der NOR-Schaltung NOR2 ist direkt mit dem linksseitigen Negationsbit nbl und ein jeweiliger erster Eingang der NAND-Schaltungen NA3 und NA4 ist mit einem invertierten linksseitigen Negationsbit beschaltet, wobei die Invertierung durch einen Inverter I1 erfolgt. Ein zweiter Eingang der NAND-Schaltungen NA1, NA3 und der NOR-Schaltung NOR2 ist direkt mit dem rechtsseitigen Negationbit nbr beschaltet und der zweite Eingang der NAND-Schaltung NA2 und der NAND-Schaltung NA4 ist mit einem invertierten rechtsseitigen Negationsbit beschaltet, wobei die Invertierung durch einen Inverter I2 erfolgt.

Das Steuersignal bme0 liegt am Ausgang einer Vierfach-ODER-Schaltung OR3, deren Eingänge jeweils mit einem Ausgang von vier UND-Schaltungen A6 ... A9 verbunden ist. Ein erster Eingang der UND-Schaltung A6 ist mit dem Ausgang der Identitats-vergleicherschaltung El, der erste Eingang der UND-Schaltungen A7, A8 und A9 ist mit dem Ausgang der Identitätsvergleicherschaltung E2 verbunden. Der zweite Eingang der UND-Schaltung A6 ist mit dem Ausgang der NOR-Schaltung NOR6, der zweite Eingang der UND-Schaltung A7 ist mit dem Ausgang der NOR-Schaltung NOR4, der zweite Eingang der UND-Schaltung A8 ist mit dem Ausgang der UND-Schaltung Al und der zweite Eingang der UND-Schaltung A9 mit dem Ausgang der NOR-Schaltung NOR3 verbunden.

Vorteilhafterweise können die beiden Steuersignale bmx und bme0 zur Erzeugung des Treffersignals hit mit verwendet werden. Dabei liegt das Treffersignal hit am Ausgang einer ODER-Schaltung OR5 an, deren erster Eingang mit dem Steuersignal bmx, der zweiter Eingang mit dem Steuersignal bme0 und deren dritter Eingang mit einem zusätzlichen Steuersignal bme1 beschaltet ist. Die ODER-Schaltung OR5 zur Erzeugung des Treffersignals hit gehört zu einem optionalen Schaltungsteil Z, der neben der ODER-Schaltung OR5 eine weitere ODER-Schaltung OR4 mit vier Eingängen und vier UND-Schaltungen A10 ... A13 aufweist. Das Steuersignal bme1 liegt dabei am Ausgang der ODER-Schaltung OR4 an, deren erster Eingang mit dem Ausgang der UND-Schaltung A10, deren zweiter Eingang mit dem Ausgang der UND-Schaltung All, deren dritter Eingang mit dem Ausgang der UND-Schaltung A12 und deren vierter Eingang mit dem Ausgang der UND-Schaltung A13 verbunden ist. Der erste Eingang der UND-Schaltung A10 ist dabei mit dem Ausgang der Identitätsvergleicherschaltung E2 verbunden und die ersten Eingänge der UND-Schaltungen A11 ... A13 sind mit dem Ausgang der Identitätsvergleicherschaltung E1 verbunden. Der zweite Eingang der UND-Schaltung A10 ist mit dem Ausgang der NOR-Schaltung NOR6, der zweite Eingang der UND-Schaltung A11 mit dem Ausgang der NOR-Schaltung NOR5, der zweite Ausgang der UND-Schaltung A12 mit dem Eingang der UND-Schaltung A1 und der zweite Eingang der UND-Schaltung A13 mit dem Ausgang der NOR-Schaltung NOR3 verbunden.

Das Steuersignal bmx erhält eine logische Eins für den Fall, daß der Ausgangswert me dem Maximum aus den Werten me0 und me1 entspricht, das Steuersignal bme0 erhält eine logische Eins für den Fall, daß der Ausgangswert me dem Wert me0 entspricht und das Steuersignal bme1 erhält eine logische Eins für den Fall, daß der Ausgangswert me dem Wert me1 entspricht. Ein Treffersignal hit gleich 1 wird also immer dann und nur dann erzeugt, wenn einer der genannten Fälle für den Ausgangswert me auftritt.

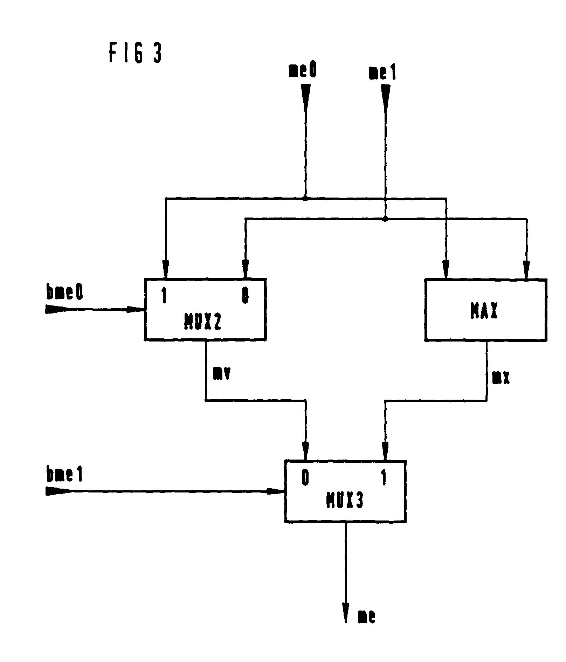

In Figur 3 ist ein Ausführungsbeispiel eines zweiten Teils der erfindungsgemäßen Vorrichtung gezeigt, bei der aus den Werten me0 und me1 in Abhängigkeit der Steuersignale bme0 und bmx der Ausgangswert me bildbar ist. Hierzu sind ein Multiplexer MUX2 und ein Multiplexer MUX3 sowie eine Maximumschaltung MAX vorgesehen. Dabei ist einem Eins-Eingang des Multiplexers MUX2 und einem ersten Eingang der Maximum-Schaltung der Wert me0 zuführbar. Einem Null-Eingang des Multiplexers MUX2 und einem zweiten Eingang der Maximumschaltung MAX ist der Wert me1 zuführbar. Ein Ausgangssignal mv des Multiplexers MUX2 ist auf einen Null-Eingang des Multiplexers MUX3 und ein Ausgangssignal mx der Maximumschaltung MAX ist auf einen Eins-Eingang des Multiplexers MUX3 gelegt. Ein Auswahleingang des Multiplexers MUX2 ist mit dem Steuersignal bme0 und ein Auswahleingang des Multiplexers MUX3 ist mit dem Steuersignal bmx beschaltet. Am Ausgang des Multiplexers MUX3 ist der Ausgangswert me entnehmbar.

Die in Figur 2 und Figur 3 dargestellte vorteilhafte Ausgestaltung der erfindungsgemäßen Vorrichtung ist dahingehend optimiert, daß der Fall me = 0 schaltungstechnisch nicht gesondert berücksichtigt wird, da beispielsweise aufgrund des Treffersignals hit = 0 eine Weiterverarbeitung des Wertes me nicht erfolgt und der Wert me somit in diesem Fall beliebig sein kann.

Zur Erläuterung der Negation eines linguistischen Wertes einer Eingangsvariablen sind in Figur 4 beispielhaft für sieben linguistische Werte die entsprechenden Zugehörigkeitsfunktionen $\mu 0$ ... $\mu 6$ normal eingezeichnet, wobei der Funktionsverlauf von NOT ($\mu_3(x)$) fett eingezeichnet ist. Unterhalb der Zugehörigkeitsfunktionen ist jeweils die Nummer ne des jeweiligen linguistischen Wertes der Eingangsvariablen von 000 bis 110 aufgetragen. Aus der Figur 4 wird deutlich, daß die Negation eines linguistischen Wertes einer Funktion entspricht, die sich aus dem Maximum aller weiteren Zugehörigkeitsfunktionen der Eingangsvariablen ergibt. Es gilt also allgemein:

$$\text{NOT } (\mu_k(x)) = \text{MAX } (\mu_l(x))$$
$$l \neq k$$

Je nachdem, an welcher Stelle die in Figur 4 gezeigten scharfen Werte a, b, c und d die Zugehörigkeitsfunktionen schneiden, lassen sich vier Fälle unterscheiden:

a) Der scharfe Eingangswert CI schneidet die Zugehörigkeitsfunktionen bei x = a: Die Fuzzifikationsschaltung liefert hierbei die Nummer ne0 für den unteren getroffenen linguistischen Wert und die Inkrementierschaltung INC bildet daraus die Nummer ne1 für den zugehörigen oberen getroffenen linguistischen Wert. In diesem Fall ist hier ne0 gleich 010 und ne1 folglich 011. Der Wert me0 der Zugehörigkeitsfunktion des unteren getroffenen linguistischen Wertes der Eingangsvariablen entspricht dabei der Zugehörigkeitsfunktion $\mu_2(a)$ und der Wert me1 der Zugehörigkeitsfunktion eines oberen getroffenen linguistischen Wertes der Zugehörigkeitsfunktion $\mu_3(a)$. Da die Nummer r1 identisch mit der Nummer ne1 ist, würde ohne die Negation der Wert me = me1 an die Regelauswertung RE weitergegeben. Aufgrund der Negation muß jedoch gelten:
NOT $(\mu_3 (a) = \text{MAX } (\mu_0(a) \ldots ; \mu_2(a); \mu_4 (a); \ldots ; \mu6 (a)) = \mu_2(a) = \text{me0}$.
Es muß also me = me0 an die Regelausworteschaltung RE weitergeleitet werden.

b) Der scharfe Eingangswert CI schneidet die Zugehörigkeitsfunktionen bei x = b, das heißt ne0 = 011 und ne1 = 100 und der Wert me0 entspricht $\mu_3$ (b) und der Wert me1 entspricht $\mu_4(b)$. Da die Nummer r1 gleich der Nummer ne0 ist, würde ohne die Negation me = me0 an die Regelausworteschaltung weitergeleitet. Aufgrund der Negation muß jedoch gelten: NOT $(\mu_3(b)) = \mu_4$ (b) = me1 und es muß me = me1 an die Regelausworteschaltung weitergeleitet werden.

c) Für den Fall, daß der scharfe Eingangswert CI die Zugehörigkeitsfunktionen bei x = c schneidet, ist die aus der Fuzzifikationsschaltung stammende Nummer ne0 gleich 000 und die Nummer ne1 entsprechend gleich 001. Der Wert me0 ist in diesem Fall gleich $\mu_0(c)$ und der Wert me1 gleich $\mu_1(c)$. Da die Nummer r1 ungleich der Nummer ne0 und die Nummer r1 ungleich der Nummer ne1 ist, würde ohne Negation für diese Regel und bezüglich dieser Eingangsvariablen ein Treffersignal hit = 0 erzeugt. Aufgrund der Negation muß jedoch gelten: NOT $(\mu_3 (c)) = \text{MAX } (\mu_0(c); \mu_1 (c))$. Hieraus ist ersichtlich, daß ein MAX-Operator auf die der Fuzzifikationsschaltung gelieferten Zugehörigkeitswerte me0 und me1 angewendet werden muß. Hierbei wird der größere der beiden Zugehörigkeitswerte an die Regelauswertungsschaltung RE weitergegeben.

d) Für den Fall, daß der scharfe Eingangswert CI die Zugehörigkeitsfunktionen bei x = d schneidet, wird die aus der Fuzzifikationsschaltung stammende Nummer ne0 = 011 und die Nummer ne1 entsprechend gleich 100. Der Zugehörigkeitswert me0 erhalt den Wert $\mu_3(d)$ und der Wert me1 den Wert $\mu_4$ (d) = 0. Da die Nummer ne0 gleich der Nummer r1 ist, würde ohne die Negation der Ausgangswert me gleich me0 an die Regelauswertungsschaltung RE weitergeleitet. Aufgrund der Negation muß jedoch gelten:
NOT$(\mu_3(d)) = \mu_4(c) = 0$. Dies ist erfüllt, wenn, wie unter b), statt me0 nun me1 an die Regelausworteschaltung RE weitergegeben wird.

In Figur 5 sind wiederum die Zugehörigkeitsfunktionen $\mu(x)$ über x für den Fall NOT $(\mu_3(x))$ dargestellt. Hieraus wird deutlich, daß sich die Negation NOT aus einer "linksseitigen" Negation NOTL und einer "rechtsseitigen" Negation NOTR zusammensetzen läßt. Die linksseitige Negation entspricht einer Negation für die Zugehörigkeitsfunktion mit der Nummer k, mit dem Zusatz, daß nur alle Zugehörigkeitsfunktionen mit Nummern kleiner als k zu einer unscharfen Vereinigungsmenge zusammengefaßt, das heißt ODER-verknüpft werden. In entsprechender Weise gilt für die rechtsseitige Negation der Zugehörigkeitsfunktion mit der Nummer k, daß alle Zugehörigkeitsfunktionen mit Nummern größer als k zu einer unscharfen Vereinigungsmenge zusammengefaßt, das heißt ODER-verknüpft werden. Für das Beispiel NOTL $(\mu_3(x))$ ist hierbei die Zugehörigkeitsfunktion fett eingezeichnet und besteht aus der Hüllkurve der Zugehörigkeitsfunktionen $\mu0 \ldots \mu2$. Die rechtsseitige Negation NOTR $(\mu_3(x))$ ist ebenfalls mit eingezeichnet und besteht aus der Hüllkurve der Zugehörigkeitsfunktionen $\mu4 \ldots \mu6$.

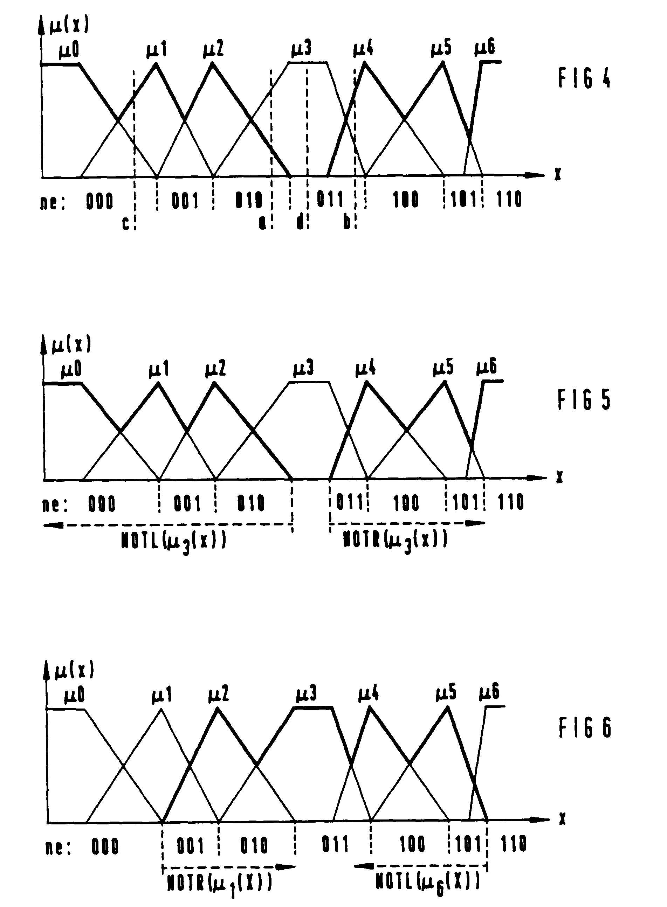

Figur 6 zeigt ebenfalls die Zugehörigkeitsfunktionen $\mu(x)$ über x, wie bei Figur 4 und Figur 5, wobei allerdings die rechtsseitige Negation NOTR $(\mu_1(x))$ links von der linksseitigen Negation NOTL $(\mu_6(x))$ liegt, das heißt mit einer niedrigeren Nummer der Zugehörigkeitsfunktion beginnt als die linksseitige Negation. Hierdurch wird eine ODER-Verknüpfung der Zugehörigkeitsfunktionen $\mu2 \ldots \mu5$ erreicht, die der fett gezeichneten Hüllkurve aus diesen Zugehörigkeitsfunktionen entspricht. Werden also vom Wissensbasisspeicher KBM zwei Nummern r1 und r2 zur Verfügung gestellt, so lassen sich neben negierten linguistischen Werten der Eingangsvariablen auf einfache Weise jeweils ODER-verknüpfte aufeinanderfolgende linguistische Werte einer einzelnen Eingangsvariablen direkt, also ohne vorherige Auflösung in mehrere Regeln mit einzelnen und regulär auftretenden linguistischen Werten der Eingangsvariablen, verarbeiten.

Eine Regel, wie beispielsweise

**if** A = (A1 or A2) **and** B = (B2 or B3) **then** V = V1 muß also nicht durch die Regeln

> **if** A = A1 **and** B = B2 **then** V = V1
> **if** A = A1 **and** B = B3 **then** V = V1
> **if** A = A2 **and** B = B2 **then** V = V1
> **if** A = A2 **and** B = B 3 **then** V = V1

aufgelöst werden, sondern kann direkt verarbeitet werden.

Bei der linksseitigen Negation NOTL muß der Ausgangswert me den Wert me0 erhalten, wenn die Nummer r1 gleich der Nummer ne1 ist, den Wert 0 erhalten, wenn die Nummer r1 kleiner gleich der Nummer ne0 ist, und das Maximum aus den Werten me0 und me1 erhalten, wenn die Nummer r1 größer als die Nummer me1 ist. Für die rechtsseitige Negation NOTR muß der Ausgangswert me den Wert me1 erhalten, wenn die Nummer r1 gleich ne0 ist, den Wert Null erhalten, wenn die Nummer r1 größer als die Nummer ne0 ist, und das Maximum aus den Werten me0 und me1 erhalten, wenn die Nummer r1 kleiner als die Nummer ne0 ist. Bei der ODER-Verknüpfung muß der Ausgangswert me den Wert me0 erhalten, wenn die zweite Nummer r2 aus dem Wissensbasisspeicher gleich der Nummer ne1 ist, den Wert me1 erhalten, wenn die Nummer r1 gleich der Nummer ne0 ist, den Wert 0 erhalten, wenn die Nummer r1 größer als die Nummer ne0 oder die Nummer r2 kleiner gleich der Nummer ne0 ist, und das Maximum aus den Werten me0 und me1 erhalten, wenn die Nummer r1 kleiner als die Nummer ne0 und die Nummer r2 größer als die Nummer ne1 ist.

Das Regelformat für eine Eingangsvariable besteht nun beispielsweise aus einem rechtsseitigen Negationsbit nbr, einem linksseitigen Negationsbit nb1, drei Bits für eine Nummer r2 und drei Bits für eine Nummer r1. Für eine Eingangsvariable müssen also acht Bit gespeichert werden. Die Bits nb1, nbr bzw. ein aus ihnen erzeugbares Negationsbit nb beziehen sich ausschließlich auf die Nummer r1. Bei r2 ungleich 000 wird das Steuerbit nb11 zur Realisierung einer ODER-Verknüpfung unter Ausschluß der Randwerte erzeugt. Ansonsten ist r2 immer auf 000 gesetzt. Die Nummer r1 erhält eine 111 Kodierung, falls eine Eingangsvariable in einer Regel ausgelassen wird und die Regeldekodierung unabhängig von dieser Eingangsvariablen erfolgen soll. Die fünf verschiedenen Fälle, nämlich keine Negation, die Negation, die linksseitige Negation, die rechtsseitige Negation und die ODER-Verknüpfung unter Ausschluß der Randwerte kann neben anderen prinzipiell möglichen Kodierungsarten so kodiert werden, daß, sofern das linksseitige und das rechtsseitige Negationsbit nicht gesetzt sind und die zweite Nummer r2 gleich 000 ist, ein nicht negierter linguistischer Wert mit der Nummer r1 weiterverarbeitet wird, daß, sofern das linksseitige Negationsbit und das rechtsseitige Negationsbit gesetzt ist und die Nummer r2 gleich 000 ist, die Negation auf den linguistischen Wert mit der Nummer r1 angewendet wird, daß, sofern das linksseitige Negationsbit gesetzt und das rechtsseitige Negationsbit nicht gesetzt sind und die Nummer r2 gleich 000 ist, der linksseitige Negationsteil verarbeitet wird, daß, sofern das rechtsseitige Negationsbit gesetzt ist und das linksseitige Negationsbit nicht gesetzt ist und die Nummer r2 gleich 000 ist, die rechtsseitige Negation bezüglich r1 erfolgt und daß sofern das linksseitige und rechtsseitige Negationsbit nicht gesetzt sind und die Nummer r2 ungleich 000 ist, die ODER-Verknüpfung zwischen den linguistischen Werten deren Nummern größer als r1 und kleiner als r2 sind erfolgt.

Bei einer weiteren Ausführungsform der erfindungsgemäßen Vorrichtung, bei der keine linksseitige und rechtsseitige Negation und keine ODER-Verknüpfung zusätzlich zur Negation möglich sind, braucht für jede Eingangsvariable nur ein Negationsbit und eine Nummer für einen linguistischen Wert vorgesehen werden. Im nicht negierten Fall wird der Ausgangswert me dabei gleich me0, wenn r1 gleich ne0 ist, me gleich me1, wenn r1 gleich ne1 ist und me gleich 0, wenn r1 weder ne0 noch ne1 ist. Bei einer Negation, also wenn das Negationsbit gesetzt ist, wird der Ausgang me gleich me1, wenn die Nummer r1 gleich ne0 ist, me gleich me0, wenn r1 gleich ne1 ist, und me gleich dem Maximum aus me0 und me1, wenn r1 weder gleich ne0 noch ne1 ist.

Im nicht negierten Fall und bei einer Negation ergeben sich bei der in Figur 2 und Figur 3 dargestellten Ausführungsform selbstverständlich die gleichen Bestimmungsgleichungen für me wie bei der zuletzt genannten Ausführungsform.

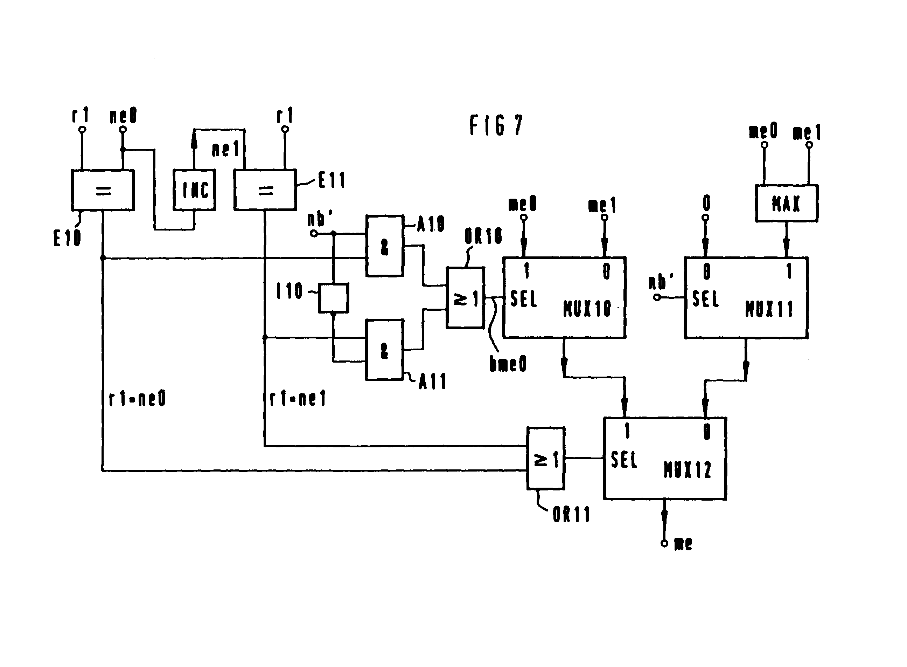

In Figur 7 ist eine entsprechende Vorrichtung gezeigt, der ein Negationsbit nb' und eine Nummer r1 für einen linguistischen Wert der Eingangsvariablen aus dem Wissensbasisspeicher KBM sowie eine Nummer ne0 für einen unteren getroffenen linguistischen Wert der Eingangsvariablen, ein Wert me0 für einen unteren getroffenen linguistischen Wert der Eingangsvariablen und ein Wert me1 eines oberen getroffenen linguistischen Wertes der Eingangsvariablen aus der Fuzzifikationsschaltung FUZ zu einem Ausgangssignal me verarbeitbar sind. Hierzu wird mit Hilfe einer Inkrementierschaltung INC aus der Nummer ne0 eine Nummer ne1 erzeugt, die Nummer r1 mit der Nummer ne0 in einer Identitäts-Vergleicherschaltung E10 und die Nummer ne1 mit der Nummer r1 in einer weiteren Identitäts-Vergleicherschaltung E11 verglichen und die beiden Ausgangssignale der Vergleicherschaltung E10 und E11 über eine ODER-Schaltung OR11 zu einem Auswahlsignal SEL einem Multiplexer MUX12 verknüpft. Das Ausgangssignal der Vergleicherschaltung E10 wird in einer UND-Schaltung A10 mit dem Negationsbit nb' zu einem Eingangssignal für das ODER-Gatter OR10 verknüpft. Ferner wird das Ausgangssignal der Vergleicherschaltung E11 über die UND-Schaltung A11 mit dem durch die Inverterschaltung I10 invertierten Negationsbit nb' zu einem weiteren Eingangssignal für das ODER-Gatter OR10 verknüpft. Das Ausgangssignal bme0 der ODER-Schaltung OR10 dient als Auswahlsignal SEL einer Multiplexerschaltung MUX10, die, sofern das Signal bme0 gleich 1 ist, den Wert me0 auf den Eins-Eingang des Multiplexer MUX12 und, sofern das Signal bme0 gleich 0 ist, den Wert me1 auf den Eins-Eingang des Multiplexers MUX12 durchschaltet. Der Null-Eingang des Multiplexers MUX12 ist mit dem Ausgang eines Multiplexers MUX11 verbunden, dessen Auswahlsignal SEL das Negationsbit nb', dessen Null-Eingang den Wert 0 und dessen Eins-Eingang den Ausgangswert einer Maximum-Schaltung MAX erhält. Ein erster Eingang einer Maximum-Schaltung MAX wird mit dem Wert me0 und ein zweiter Eingang der Maximum-Schaltung MAX wird mit dem Wert ME1 versorgt. Abhängig vom Ausgangssignal des ODER-Gatters OR11 wird entweder das Ausgangssignal des Multiplexers MUX10 oder das Ausgangssignal des Multiplexers MUX11 zum Ausgang des Multiplexers MUX 12 durchgeschaltet und bildet das Ausgangssignal me.

In ähnlicher Weise sind Vorrichtungen möglich, die eine Verarbeitung von mehr als zwei sich überlappende Zugehörigkeitsfunktionen ermöglichen. Ferner sind neben der einen Nummer r2 für den weiteren linguistischen Wert der Eingangsvariablen in der jeweiligen Regel eine oder mehrere zusätzliche Nummern dieser Art denkbar.

**Patentansprüche**

1. Vorrichtung in einem Fuzzy-Inference-Prozessor,

bei der ein Negationsbit (nb) zur Negation eines linguistischen Wertes in einer jeweiligen Regel, eine Nummer (r1) für einen linguistischen Wert einer Eingangsvariablen in der jeweiligen Regel, eine Nummer (ne0) für einen unteren getroffenen linguistischen Wert der Eingangsvariablen, ein Wert (me0) der zugehörigkeitsfunktion des unteren getroffenen linguistischen Wertes der Eingangsvariablen, ein Wert (me1) der Zugehörigkeitsfunktion eines oberen getroffenen linguistischen Wertes der Eingangsvariablen zuführbar sind und eine Nummer (ne1) für einen oberen getroffenen linguistischen Wert der Eingangsvariablen durch Addition einer Eins zur Nummer für den unteren getroffenen linguistischen Wert bildbar ist,

bei der, sofern das Negationsbit gesetzt ist, ein Ausgangswert (me) dem Wert (me1) der Zugehörigkeitsfunktion des oberen getroffenen linguistischen Wertes entspricht, wenn die Nummer (r1) für den linguistischen Wert der Eingangsvariablen in der jeweiligen Regel gleich der Nummer (ne0) für den unteren getroffenen linguistischen Wert der Eingangsvariablen ist, der Ausgangswert (me) gleich dem Wert (me0) der Zugehörigkeitsfunktion des unteren getroffenen linguistischen Wertes der Eingangsvariablen ist, wenn die Nummer (r1) für den linguistischen Wert der Eingangsvariablen in der jeweiligen Regel gleich der Nummer (ne1) für den oberen getroffenen linguistischen Wert ist, und der Ausgangswert (me) dem Maximum aus den Werten (me0, me1) der getroffenen linguistischen Werte der Eingangsvariablen entspricht, wenn die Nummer (r1) für den linguistischen Wert der Eingangsvariablen in der jeweiligen Regel weder der Nummer (ne0) für den unteren getroffenen linguistischen Wert der Eingangsvariablen noch der Nummer (ne1) für den oberen getroffenen linguistischen Wert der Eingangsvariablen entspricht.

2. Vorrichtung nach Anspruch 1,

bei der anstelle des Negationsbits (nb) ein linksseitiges Negationsbit (nb1), ein rechtsseitiges Negationsbit (nbr) und eine Nummer (r2) für einen weiteren linguistischen Wert der Eingangsvariablen in der jeweiligen Regel vorgesehen sind,

bei der, sofern das linksseitige Negationsbit (nb1) gesetzt, das rechtsseitige Negationsbit (nbr) nicht gesetzt und die Nummer (r2) für den weiteren linguistischen Wert der Eingangsvariablen in der jeweiligen Regel Null ist, der Ausgangswert (me) dem Wert (me0) der Zugehörigkeitsfunktion des unteren getroffenen linguistischen Wertes der Eingangsvariablen entspricht, wenn die Nummer (r1) für den linguistischen Wert der Eingangsvariablen in der jeweiligen Regel der Nummer (ne1) für den oberen getroffenen linguistischen Wert der Eingangsvariablen entspricht, und der Ausgangswert (me) dem Maximum aus den Werten (me0, me1) der Zugehörigkeitsfunktionen der getroffenen linguistischen Werte der Eingangsvariablen entspricht, wenn die Nummer (r1) für den linguistischen Wert der Eingangsvariablen in der jeweiligen Regel größer als die Nummer (ne1) für den oberen getroffenen linguistischen Wert der Eingangsvariablen ist, wodurch alle linguistischen Werte mit einer Nummer kleiner als die Nummer (r1) für einen linguistischen Wert der Eingangsvariablen in der jeweiligen Regel direkt unscharf ODER-verknüpft sind,

bei der, sofern das linksseitige Negationsbit nicht gesetzt, das rechtsseitige Negationsbit gesetzt und die Nummer (r2) für den weiteren linguistischen Wert der Eingangsvariablen in einer jeweiligen Regel gleich Null ist, der Ausgangswert (me) gleich dem Wert (me1) der Zugehörigkeitsfunktion des oberen getroffen linguistischen Wertes ist, wenn die Nummer (r1) für den linguistischen Wert der Eingangsvariablen der jeweiligen Regel gleich der Nummer (ne0) für den unteren getroffenen linguistischen Wert der Eingangsvariablen ist, und der Ausgangswert (me) dem Maximum aus den Werten (me0, me1) der Zugehörigkeitsfunktionen der getroffenen linguistischen Werte entspricht, wenn die Nummer (r1) für den linguistischen Wert der Eingangsvariablen in der jeweiligen Regel kleiner als die Nummer (ne0) für den unteren getroffenen linguistischen Wert der Eingangsvariablen ist, wodurch alle linguistischen Werte mit der Nummer größer als die Nummer (r1) für den linguistischen Wert einer Eingangsvariablen der jeweiligen Regel direkt unscharf ODER-verknüpft sind und

bei der, sofern das linksseitige Negationsbit und das rechtsseitige Negationsbit nicht gesetzt sind und die Nummer (r2) für den weiteren linguistischen Wert in der jeweiligen Regel ungleich Null ist, der Ausgangswert (me) dem Wert (me0) der Zugehörigkeitsfunktion des unteren getroffenen linguistischen Wertes der Eingangsvariablen entspricht, wenn die Nummer (r2) für den weiteren linguistischen Wert in einer jeweiligen Regel der Nummer (nel) für den oberen getroffenen linguistischen Wert der Eingangsvariablen entspricht, der Ausgangswert (me) dem Wert (mel) der Zugehörigkeitsfunktion des oberen getroffenen linguistischen Wertes der Eingangsvariablen entspricht, wenn die Nummer (r1) für den linguistischen Wert einer Eingangsvariablen der jeweiligen Regel gleich der Nummer (ne0) für den unteren getroffenen linguistischen Wert der Eingangsvariablen ist und der Ausgangswert (me) gleich dem Maximum aus den Werten (me0, me1) der Zugehörigkeitsfunktionen der getroffenen linguistischen Werte der Eingangsvariablen entspricht, wenn die Nummer (r1) für den linguistischen Wert der Eingangsvariablen der jeweiligen Regel kleiner als die Nummer (ne0) für den unteren getroffenen linguistischen Wert der Eingangsvariablen und die Nummer (r2) für den weiteren linguistischen Wert in einer jeweiligen Regel größer als die Nummer (ne1) für den oberen getroffenen linguistischen Wert der Eingangsvariablen ist, wodurch alle linguistischen Werte mit Nummern größer als die Nummer (r1) für den linguistischen Wert einer Eingangsvariablen in der jeweiligen Regel und mit Nummern kleiner als die Nummer (r2) für den weiteren linguistischen Wert in einer jeweiligen Regel direkt unscharf ODER-verknüpft sind.

**3.**     Vorrichtung nach Anspruch 2,

bei der der Ausgangswert (me) gleich Null ist, sofern das linksseitige Negationsbit (nbl) gesetzt, das rechtsseitige Negationsbit (nbr) nicht gesetzt, die Nummer (r2) für den weiteren linguistischen Wert der jeweiligen Regel gleich Null und die Nummer (r1) für den linguistischen Wert der Eingangsvariablen in der jeweiligen Regel kleiner gleich der Nummer (ne0) für einen unteren getroffenen linguistischen Wert der Eingangsvariablen ist oder,

sofern das linksseitige Negationsbit (nbl) nicht gesetzt und das rechtsseitige Negationsbit (nbr) gesetzt und die Nummer (r2) für den weiteren linguistischen Wert in der jeweiligen Regel gleich Null ist und die Nummer (r1) für den linguistischen Wert der Eingangsvariablen in der jeweiligen Regel größer als eine Nummer (ne0) für den unteren getroffenen linguistischen Wert der Eingangsvariablen ist oder,

sofern das linksseitige Negationsbit und das rechtsseitige Negationsbit nicht gesetzt sind und die Nummer (r2) für den weiteren linguistischen Wert in der jeweiligen Regel ungleich Null ist und die Bedingung erfüllt ist, daß die Nummer (r1) für den linguistischen Wert einer Eingangsvariablen der jeweiligen Regel größer als die Nummer (ne0) für den unteren getroffenen linguistischen Wert der Eingangsvariablen oder die Nummer (r2) für den weiteren linguistischen Wert in der jeweiligen Regel kleiner gleich der Nummer (ne0) für den unteren getroffenen linguistischen Wert der Eingangsvariablen ist.

**4.**     Vorrichtung nach Anspruch 2,

bei der eine Steuereinheit vorgesehen ist, in der aus dem linksseitigen Negationsbit (nbl), dem rechtsseitigen Negationsbit (nbr), der Nummer (ne0) für den unteren getroffenen linguistischen Wert der Eingangsvariablen, der Nummer (r1) für den linguistischen Wert der Eingangsvariablen in der jeweiligen Regel und der Nummer (r2) für den weiteren lingutischen Wert in der jeweiligen Regel ein erstes Steuersignal (bmx) und ein zweites Steuersignal (bme0) bildbar ist,

bei der eine Schalteinheit mit einem ersten Multiplexer (MUX2), einem zweiten Multiplexer (MUX3) und eine Maximumschaltung (MAX) vorgesehen ist,

bei der der Wert (me0) der Zugehörigkeitsfunktion des unteren getroffenen linguistischen Wertes der Eingangsvariablen einem Eins-Eingang des ersten Multiplexers (MUX2) und einem ersten Eingang der Maximumschaltung (MAX) und der Wert (me1) der Zugehörigkeitsfunktion des oberen getroffenen linguistischen Wertes der Eingangsvariablen einem Null-Eingang des ersten Multiplexers (MUX2) und einem zweiten Eingang der Maximumschaltung (MAX) zuführbar sind,

bei der das Ausgangssignal (mv) des ersten Multiplexers (MUX2) einem Null-Eingang des zweiten Multiplexers (MUX3) und das Ausgangssignal (mx) der Maximumschaltung einem Eins-Eingang des zweiten Multiplexers (MUX3) zuführbar ist und der Ausgangswert (me) am Ausgang des zweiten Multiplexers (MUX3) entnehmbar ist und

bei der der erste Multiplexer (MUX2) durch das zweite Steuersignal (bme0) und der zweite Multiplexer durch das erste Steuersignal (bmx) ansteuerbar ist.

5. Vorrichtung nach Anspruch 4,
bei der ein Treffersignal (hit) am Ausgang einer ODER-Schaltung (OR5) entnehmbar ist, deren erster Eingang mit dem ersten Steuersignal (bmx), deren zweiter Eingang mit dem zweiten Steuersignal (bme0) und deren dritter Eingang mit einem weiteren Steuersignal (bme1) beschaltet ist.

6. Vorrichtung nach Anspruch 1,

bei der das Ausgangssignal (me) dem Ausgangssignal eines ersten Multiplexers (MUX12) entspricht dessen Eins-Eingang dem Ausgang eines zweiten Multiplexers (MUX10) und dessen Null-Eingang einem Ausgang eines dritten Multiplexers (MUX11) entspricht,

bei der der Eins-Eingang des zweiten Multiplexers (MUX10) mit dem Wert (me0) der Zugehörigkeitsfunktion des unteren getroffenen linguistischen Wert der Eingangsvariablen und der Null-Eingang des zweiten Multiplexers (MUX10) mit dem Wert (me1) der Zugehörigkeitsfunktion des oberen getroffenen linguistischen Wertes beschaltet ist,

bei der der Null-Eingang des dritten Multiplexers (MUX11) mit Null, der Eins-Eingang des dritten Multiplexers (MUX11) mit dem Ausgang einer Maximumschaltung (MAX) beschaltet sind, wobei ein Eingang der Maximumschaltung (MAX) mit dem Wert (me0) der Zugehörigkeitsfunktion des unteren getroffenen linguistischen Wertes und ein anderer Eingang der Maximumschaltung (MAX) mit dem Wert (me1) der Zugehörigkeitsfunktion des oberen getroffenen linguistischen Wertes der Eingangsvariablen beschaltet sind, und das Auswahlsignal (SEL) des dritten Multiplexers (MUX11) dem Negationsbit (nb') entspricht,

bei der das Auswahlsignal (SEL) des ersten Multiplexers (MUX12) durch eine erste ODER-Schaltung (OR11) bildbar ist, deren erster Eingang mit einem Ausgang einer ersten Identitäts-Vergleicherschaltung (E10) und deren zweiter Eingang mit dem Ausgang einer zweiten Identitäts-Vergleicherschaltung (E11) beschaltet sind, wobei in der ersten Identitäts-Vergleicherschaltung die Nummer (r1) für den linguistischen Wert der Eingangsvariablen in der jeweiligen Regel mit der Nummer (ne0) für den unteren getroffenen linguistischen Wert der Eingangsvariablen und in der zweiten Identitäts-Vergleicherschaltung (E11) die Nummer (r1) für den linguistischen Wert der Eingangsvariablen in der jeweiligen Regel mit der Nummer (ne1) für den oberen getroffenen linguistischen Wert der Eingangsvariablen auf Identität verglichen wird, wobei die Nummer (ne1) für den oberen getroffenen linguistischen Wert der Eingangsvariablen durch eine Inkrementierschaltung (INC) aus der Nummer (ne0) für den unteren getroffenen linguistischen Wert der Eingangsvariablen bildbar ist,

bei der ein Auswahlsignal (bme0) für den zweiten Multiplexer (MUX10) durch das Ausgangssignal einer zweiten ODER-Schaltung (OR10) bildbar ist, deren erster Eingang mit dem Ausgang einer ersten UND-Schaltung (A11) und deren zweiter Eingang mit dem Ausgang einer zweiten UND-Schaltung (A10) beschaltet ist, wobei ein erster Eingang der ersten UND-Schaltung (A11) mit dem Ausgang der zweiten Identitäts-Vergleicherschaltung (E11) und ein erster Eingang der zweiten UND-Schaltung (A10) mit dem Ausgang der ersten Identitäts-Vergleicherschaltung (E10) verbunden und der zweite Eingang der zweiten UND-Schaltung (A10) mit dem Negationsbit (nb') direkt und der zweite Eingang der ersten UND-Schaltung (A11) über einen Inverter (I10) mit dem Negtionsbit (nb') versorgbar sind.

**Claims**

1. Device in a fuzzy inference processor,

in which it is possible to feed a negation bit (nb) for negating a linguistic value in a respective rule, a number (r1) for a linguistic value of an input variable in the respective rule, a number (ne0) for a lower affected linguistic value of the input variable, a value (me0) of the membership function of the lower affected linguistic value of the input variable, a value (me1) of the membership function of an upper affected linguistic value of the input variable, and it is possible to form a number (ne1) for an upper affected linguistic value of the input variable by adding one to the number for the lower affected linguistic value,

in which, if the negation bit is set, an output value (me) corresponds to the value (me1) of the membership function of the upper affected linguistic value when the number (r1) for the linguistic value of the input variable in the respective rule is equal to the number (ne0) for the lower affected linguistic value of the input variable, the output value (me) is equal to the value (me0) of the membership function of the lower affected linguistic value of the input variable, when the number (r1) for the linguistic value of the input variable in the respective rule is equal to the number (nel) for the upper affected linguistic value, and the output value (me) corresponds to the maximum of the values (me0, me1) of the affected linguistic values of the input variable when the number (r1) for the linguistic value of the input variable in the respective rule corresponds neither to the number (ne0) for the lower affected linguistic value of the input variable nor to the number (ne1) for the upper affected linguistic value of the input variable.

2.  Device according to Claim 1,

    in which instead of the negation bit (nb) a left-hand negation bit (nb1), a right-hand negation bit (nbr) and a number (r2) for a further linguistic value of the input variable in the respective rule are provided,
    in which, if the left-hand negation bit (nb1) is set, the right-hand negation bit (nbr) is not set and the number (r2) for the further linguistic value of the input variable in the respective rule is zero, the output value (me) corresponds to the value (me0) of the membership function of the lower affected linguistic value of the input variable, when the number (r1) for the linguistic value of the input variable in the respective rule corresponds to the number (ne1) for the upper affected linguistic value of the input variable, and the output value (me) corresponds to the maximum of the values (me0, me1) of the membership functions of the affected linguistic values of the input variable, when the number (r1) for the linguistic value of the input variable in the respective rule is greater than the number (ne1) for the upper affected linguistic value of the input variable, as a result of which all the linguistic values with a number less than the number (r1) for a linguistic value of the input variable in the respective rule are subjected to a direct fuzzy OR operation,

in which, if the left-hand negation bit is not set, the right-hand negation bit is set and the number (r2) for the further linguistic value of the input variable in a respective rule is equal to zero, the output value (me) is equal to the value (me1) of the membership function of the upper affected linguistic value, when the number (r1) for the linguistic value of the input variable of the respective rule is equal to the number (ne0) for the lower affected linguistic value of the input variable, and the output value (me) corresponds to the maximum of the values (me0, me1) of the membership functions of the affected linguistic values, when the number (r1) for the linguistic value of the input variable in the respective rule is less than the number (ne0) for the lower affected linguistic value of the input variable, as a result of which all the linguistic values with the number greater than the number (r1) for the linguistic value of an input variable of the respective rule are subjected to a direct fuzzy OR operation, and

in which, if the left-hand negation bit and the right-hand negation bit are not set and the number (r2) for the further linguistic value in the respective rule is not equal to zero, the output value (me) corresponds to the value (me0) of the membership function of the lower affected linguistic value of the input variable, when the number (r2) for the further linguistic value in a respective rule corresponds to the number (ne1) for the upper affected linguistic value of the input variable, the output value (me) corresponds to the value (me1) of the membership function of the upper affected linguistic value of the input variable, when the number (r1) for the linguistic value of an input variable of the respective rule is equal to the number (ne0) for the lower affected linguistic value of the input variable and the output value (me) corresponds to the maximum of the values (me0, me1) of the membership functions of the affected linguistic values of the input variable, when the number (r1) for the linguistic value of the input variable of the respective rule is less than the number (ne0) for the lower affected linguistic value of the input variable and the number (r2) for the further linguistic value in a respective rule is greater than the number (ne1) for the upper affected linguistic value of the input variable, as a result of which all the linguistic values with numbers greater than the number (r1) for the linguistic value of an input variable in the respective rule, and with numbers less than the number (r2) for the further linguistic value in a respective rule are subjected to a direct fuzzy OR operation.

3. Device according to Claim 2,

in which the output value (me) is equal to zero if the left-hand negation bit (nb1) is set, the right-hand negation bit (nbr) is not set, the number (r2) for the further linguistic value of the respective rule is equal to zero and the number (r1) for the linguistic value of the input variable in the respective rule is less than or equal to the number (ne0) for a lower affected linguistic value of the input variable, or,
if the left-hand negation bit (nbl) is not set and the right-hand negation bit (nbr) is set and the number (r2) for the further linguistic value in the respective rule is equal to zero and the number (r1) for the linguistic value of the input variable in the respective rule is greater than a number (ne0) for the lower affected linguistic value of the input variable, or,
if the left-hand negation bit and the right-hand negation bit are not set and the number (r2) for the further linguistic value in the respective rule is not equal to zero and the condition is fulfilled that the number (r1) for the linguistic value of an input variable of the respective rule is greater than the number (ne0) for the lower affected linguistic value of the input variable, or the number (r2) for the further linguistic value in the respective rule is less than or equal to the number (ne0) for the lower affected linguistic value of the input variable.

4. Device according to Claim 2,

in which a control unit is provided in which a first control signal (bmx) and a second control signal (bme0) can be formed from the left-hand negation bit (nbl), the right-hand negation bit (nbr), the number (ne0) for the lower affected linguistic value of the input variable, the number (r1) for the linguistic value of the input variable in the respective rule, and the number (r2) for the further linguistic value in the respective rule, in which a switching unit having a first multiplexer (MUX2), a second multiplexer (MUX3) and a maximum circuit (MAX) is provided, in which the value (me0) of the membership function of the lower affected linguistic value of the input variable can be fed to a ones input of the first multiplexer (MUX2) and to a first input of the maximum circuit (MAX), and the value (me1) of the membership function of the upper affected linguistic value of the input variable can be fed to a zeros input of the first multiplexer (MUX2) and to a second input of the maximum circuit (MAX),
in which the output signal (mv) of the first multiplexer (MUX2) can be fed to a zeros input of the second multiplexer (MUX3), and the output signal (mx) of the maximum circuit can be fed to a ones input of the second multiplexer (MUX3), and the output value (me) can be extracted at the output of the second multiplexer (MUX3), and
in which the first multiplexer (MUX2) can be driven by the second control signal (bme0), and the second multiplexer can be driven by the first control signal (bmx).

5. Device according to Claim 4,
in which a hit signal can be extracted at the output of an OR circuit (OR5) whose first input is connected to the first control signal (bmx), whose second input is connected to the second control signal (bme0) and whose third input is connected to a further control signal (bme1).

6. Device according to Claim 1,

in which the output signal (me) corresponds to the output signal of a first multiplexer (MUX12) whose ones input corresponds to the output of a second multiplexer (MUX10) and whose zeros input corresponds to an output of a third multiplexer (MUX11),
in which the ones input of the second multiplexer (MUX10) is connected to the value (me0) of the membership function of the lower affected linguistic value of the input variable, and the zeros input of the second multiplexer (MUX10) is connected to the value (me1) of the membership function of the upper affected linguistic value,
in which the zeros input of the third multiplexer (MUX11) is connected to zero, the ones input of the third multiplexer (MUX11) is connected to the output of a maximum circuit (MAX), one input of the maximum circuit (MAX) being connected to the value (me0) of the membership function of the lower affected linguistic value, and a further input of the maximum circuit (MAX) being connected to the value (me1) of the membership function of the upper affected linguistic value of the input variable, and the selection signal (SEL) of the third multiplexer (MUX11) corresponds to the negation bit (nb'),
in which the selection signal (SEL) of the first multiplexer (MUX12) can be formed by a first OR circuit (OR11) whose first input is connected to an output of a first identity comparator circuit (E10) and whose second input is connected to the output of a second identity comparator circuit (E11), it being the case that the number (r1) for the linguistic value of the input variable in the respective rule is compared in the first identity comparator circuit for identity with the number (ne0) for the lower affected linguistic value of the input variable, and the number (r1) for the linguistic value of the input variable in the respective rule is compared in the second identity comparator circuit (E11) for identity with the number (ne1) for the upper affected linguistic value of the input variable, it being possible to form the number (ne1) for the upper affected linguistic value of the input variable from the number (ne0) for the lower affected linguistic value of the input variable by means of an incrementing circuit (INC), and

in which a selection signal (bme0) for the second multiplexer (MUX10) can be formed by the output signal of a second OR circuit (OR10) whose first input is connected to the output of a first AND circuit (A11) and whose second input is connected to the output of a second AND circuit (A10), a first input of the first AND circuit (A11) being connected to the output of the second identity comparator circuit (E11), and a first input of the second AND circuit (A10) being connected to the output of the first identity comparator circuit (E10), and it being possible to supply the second input of the second AND circuit (A10) directly with the negation bit (nb') and to supply the second input of the first AND circuit (A11) with the negation bit (nb') via an inverter (I10).

## Revendications

1.  Dispositif dans un processeur d'inférence à logique floue,

    dans lequel un bit de négation (nb) pour la négation d'une valeur linguistique dans une règle respective, un numéro (r1) pour une valeur linguistique d'une variable d'entrée dans la règle respective, un numéro (ne0) pour une valeur linguistique inférieure atteinte des variables d'entrée, une valeur (me0) de la fonction d'appartenance de la valeur linguistique inférieure atteinte des variables d'entrée, une valeur (me1) de la fonction d'appartenance d'une valeur linguistique supérieure atteinte des variables d'entrée peuvent être amenés, et un numéro (ne1) peut être constitué pour une valeur linguistique supérieure atteinte des variables d'entrée par addition d'un un au numéro pour la valeur linguistique inférieure atteinte,

dans lequel, dans la mesure où le bit de négation est activé, une valeur de sortie (me) correspond à la valeur (me1) de la fonction d'appartenance de la valeur linguistique supérieure atteinte si le numéro (r1) pour la valeur linguistique des variables d'entrée dans la règle respective est égal au numéro (ne0) pour la valeur linguistique inférieure atteinte des variables d'entrée, la valeur de sortie (me) est égale à la valeur (me0) de la fonction d'appartenance de la valeur linguistique inférieure atteinte des variables d'entrée si le numéro (r1) pour la valeur linguistique des variables d'entrée dans la règle respective est égale au numéro (ne1) pour la valeur linguistique supérieure atteinte et la valeur de sortie (me) correspond au maximum résultant des valeurs (me0, m1) des valeurs linguistiques atteintes des variables d'entrée si le numéro (r1) pour la valeur linguistique des variables d'entrée dans la règle respective ne correspond ni au numéro (ne0) pour la valeur linguistique inférieure atteinte des variables d'entrée ni au numéro (ne1) pour la valeur linguistique supérieure atteinte des variables d'entrée.

2.  Dispositif selon la revendication 1,

    dans lequel, à la place du bit de négation (nb) un bit de négation situé du côté gauche (nbl), un bit de négation situé du côté droit (nbr) et un numéro (r2) pour une autre valeur linguistique des variables d'entrée dans la règle respective sont prévus.

    dans lequel, dans la mesure où le bit de négation (nbl), situé du côté gauche, est activé, le bit de négation (nbr), situé du côté droit n'est pas activé et le numéro (r2) pour la valeur linguistique supplémentaire des variables d'entrée dans la règle respective est zéro, la valeur de sortie (me) correspond à la valeur (me0) de la fonction d'appartenance de la valeur linguistique inférieure atteinte des variables d'entrée si le numéro (r1) pour la valeur linguistique des variables d'entrée dans la règle respective correspond au numéro (ne1) pour la valeur linguistique supérieure atteinte des variables d'entrée et la valeur de sortie (me) correspond au maximum résultant des valeurs (me0, me1) des fonctions d'appartenance des valeurs linguistiques atteintes des variables d'entrée si le numéro (r1) pour la valeur linguistique des variables d'entrée dans la règle respective est supérieur au numéro (ne1) pour la valeur linguistique supérieure atteinte des variables d'entrée, ce qui a pour effet que toutes les valeurs linguistiques avec un numéro inférieur au numéro (r1) pour une valeur linguistique des variables d'entrée dans la règle respective sont directement enchaînées OU de manière floue.

dans lequel, dans la mesure où le bit de négation situé du côté gauche n'est pas activé, le bit de négation situé du côté droit est activé et le numéro (r2) pour la valeur linguistique supplémentaire des variables d'entrée dans une règle respective est égal à zéro, la valeur de sortie (me) est égale à la valeur (me1) de la fonction d'appartenance de la valeur linguistique supérieure atteinte si le numéro (r1) pour la valeur linguistique des variables d'entrée de la règle respective est égal au numéro (ne0) pour la valeur linguistique inférieure atteinte des variables d'entrée et la valeur de sortie (me) correspond au maximum résultant des valeurs (me0, me1) des fonctions d'appartenance des valeurs linguistiques atteintes si le numéro (r1) pour la valeur linguistique des variables d'entrée dans la règle respective est inférieur au numéro (ne0) pour la valeur linguistique inférieure atteinte des variables d'entrée, ce qui a pour effet que toutes les valeurs linguistiques avec le numéro supérieur au numéro (r1) pour la valeur linguistique d'une variable d'entrée de la règle respective sont enchaînées OU directement de manière floue et

dans lequel dans la mesure où le bit de négation situé du côté gauche et le bit de négation situé du côté droit ne sont pas activés et le numéro (r2) pour la valeur linguistique supplémentaire dans la règle respective n'est pas égal à zéro, la valeur de sortie (me) correspond à la valeur (me0) de la fonction d'appartenance de la valeur linguistique inférieure atteinte des variables d'entrée si le numéro (r2) pour la valeur linguistique supplémentaire dans une règle respective correspond au numéro (ne1) pour la valeur linguistique supérieure atteinte des variables d'entrée, la valeur de sortie (me) correspond à la valeur (me1) de la fonction d'appartenance de la valeur linguistique supérieure atteinte des variables d'entrée si le numéro (r1) pour la valeur linguistique d'une variable d'entrée de la règle respective est égal au numéro (ne0) pour la valeur linguistique inférieure atteinte des variables d'entrée et la valeur de sortie (me) est égale au maximum résultant des valeurs (me0, me1) des fonctions d'appartenance des valeurs linguistiques atteintes des variables d'entrée si le numéro (r1) pour la valeur linguistique des variables d'entrée de la règle respective est inférieur au numéro (ne0) pour la valeur linguistique inférieure atteinte des variables d'entrée et le numéro (r2) pour la valeur linguistique supplémentaire dans une règle respective est supérieur au numéro (ne1) pour la valeur linguistique supérieure atteinte des variables d'entrée, ce qui a pour effet que toutes les valeurs linguistiques avec des numéros supérieurs au numéro (r1) pour la valeur linguistique d'une variable d'entrée dans la règle respective et avec des numéros inférieurs au numéro (r2) pour la valeur linguistique supplémentaire dans une règle respective sont enchaînés OU directement de manière floue.

3.　Dispositif selon la revendication 2,

dans lequel la valeur de sortie (me) est égale à zéro, dans la mesure où le bit de négation situé du côté gauche (nbl) est activé, le bit de négation situé du côté droit (nbr) n'est pas activé, le numéro (r2) pour la valeur linguistique supplémentaire de la règle respective est égal à zéro et le numéro (r1) pour la valeur linguistique des variables d'entrée dans la règle respective est inférieur ou égal au numéro (ne0) pour une valeur linguistique inférieure atteinte des variables d'entrée ou,

dans la mesure où le bit de négation (nbl), situé du côté gauche, n'est pas activé et le bit de négation (nbr), situé du côté droit, est activé et le numéro (r2) pour la valeur linguistique supplémentaire dans la règle respective est égal à zéro et le numéro (r1) pour la valeur linguistique des variables d'entrée dans la règle respective est supérieur au numéro (ne0) pour la valeur linguistique inférieure atteinte des variables d'entrée ou,

dans la mesure où le bit de négation situé du côté gauche et le bit de négation situé du côté droit ne sont pas activés et le numéro (r2) pour la valeur linguistique supplémentaire dans la règle respective n'est pas égal à zéro et la condition est remplie selon laquelle le numéro (r1) pour la valeur linguistique d'une variable d'entrée de la règle respective est supérieur au numéro (ne0) pour la valeur linguistique inférieure atteinte des variables d'entrée ou le numéro (r2) pour la valeur linguistique supplémentaire dans la règle respective est inférieur ou égal au numéro (ne0) pour la valeur linguistique inférieure atteinte des variables d'entrée.

4.　Dispositif selon la revendication 2,

dans lequel une unité de commande est prévue dans laquelle on peut constituer un premier signal de commande (bmx) et un second signal de commande (bme0) à partir du bit de négation (nbl) situé du côté gauche, du bit de négation (nbr) situé du côté droit, du numéro (ne0) pour la valeur linguistique inférieure atteinte des variables d'entrée, du numéro (r1) pour la valeur linguistique des variables d'entrée dans la règle respective et du numéro (r2) pour la valeur linguistique supplémentaire dans la règle respective

dans lequel une unité de commutation avec un premier multiplexeur (MUX2), un second multiplexeur (MUX3) et un circuit maximum (MAX) est prévue,

dans lequel la valeur (me0) de la fonction d'appartenance de la valeur linguistique inférieure atteinte des variables d'entrée peut être amenée à une entrée un du premier multiplexeur (MUX2) et à une première entrée du circuit maximum (MAX) et la valeur (me1) de la fonction d'appartenance de la valeur linguistique supérieure atteinte des variables d'entrée peut être amenée à une entrée zéro du premier multiplexeur (MUX2) et à une seconde entrée du circuit maximum (MAX).

dans lequel le signal de sortie (mv) du premier multiplexeur (MUX2) peut être amené à une entrée zéro du second multiplexeur (MUX3) et le signal de sortie (mx) du circuit maximum à une entrée un du second multiplexeur (MUX3) et la valeur de sortie (me) peut être prélevée sur la sortie du second multiplexeur (MUX3) et

dans lequel le premier multiplexeur (MUX2) peut être excité par le second signal de commande (bme0) et le second multiplexeur par le premier signal de commande (bmx).

5. Dispositif selon la revendication 4,
   dans lequel un signal de réponse pertinente (hit) peut être prélevé sur la sortie d'un circuit OU (OR5) dont la première entrée est branchée sur le premier signal de commande (bmx) dont la seconde entrée est branchée sur le second signal de commande (bme0) et dont la troisième entrée est branchée sur un signal de commande supplémentaire (bme1).

6. Dispositif selon la revendication 1,

   dans lequel le signal de sortie (me) correspond au signal de sortie d'un premier multiplexeur (MUX12) dont l'entrée un correspond à la sortie d'un second multiplexeur (MUX10) et dont l'entrée zéro correspond à une sortie d'un troisième multiplexeur (MUX11).

dans lequel l'entrée un du second multiplexeur (MUX10) est branchée sur la valeur (me0) de la fonction d'appartenance de la valeur linguistique inférieure atteinte des variables d'entrée et l'entrée zéro du second multiplexeur (MUX10) sur la valeur (me1) de la fonction d'appartenance de la valeur linguistique supérieure atteinte,

dans lequel l'entrée zéro du troisième multiplexeur (MUX11) est branchée sur zéro, l'entrée un du troisième multiplexeur (MUX11) sur la sortie d'un circuit maximum (MAX), étant précisé qu'une entrée du circuit maximum (MAX) est branchée sur la valeur (me0) de la fonction d'appartenance de la valeur linguistique inférieure atteinte et une autre entrée du circuit maximum (MAX) est branchée sur la valeur (me1) de la fonction d'appartenance de la valeur linguistique supérieure atteinte des variables d'entrée et le signal de sélection (SEL) du troisième mutliplexeur (MUX11) correspond au bit de négation (nb').

dans lequel le signal de sélection (SEL) du premier multiplexeur (MUX12) peut être constitué par un premier circuit OU (OR11) dont la première entrée est branchée sur une sortie d'un premier circuit-comparateur d'identité (E10) et dont la seconde entrée est branchée sur la sortie d'un second circuit-comparateur d'identité (E11), étant précisé que, dans le premier circuit-comparateur d'identité le numéro (r1) pour la valeur linguistique des variables d'entrée dans la règle respective est comparé au numéro (ne0) pour la valeur linguistique inférieure atteinte des variables d'entrée et dans le second circuit-comparateur d'identité (E11) le numéro (r1) pour la valeur linguistique des variables d'entrée dans la règle respective est comparé au numéro (ne1) pour la valeur linguistique supérieure atteinte des variables d'entrée en ce qui concerne l'identité, étant précisé que le numéro (ne1) pour la valeur linguistique supérieure atteinte des variables d'entrée peut être constitué par un circuit d'incrémentation (INC) à partir du numéro (ne0) pour la valeur linguistique inférieure atteinte des variables d'entrée.

dans lequel un signal de sélection (bme0) peut être constitué pour le second multiplexeur (MUX10) par le signal de sortie d'un second circuit OU (OR10) dont la première entrée est branchée sur la sortie d'un premier circuit ET (A11) et dont la seconde entrée est branchée à la sortie d'un second circuit ET (A10), étant précisé qu'une première entrée du premier circuit ET (A11) est raccordée à la sortie du second circuit-comparateur d'identité (E11) et une première entrée du second circuit ET (A10) à la sortie du premier circuit-comparateur d'indentité (E10) et la seconde entrée du second circuit ET (A10) peut être alimentée directement avec le bit de négation (nb') et la seconde entrée du premier circuit ET (A11) par un inverseur (I10) avec le bit de négation (nb').

FIG 1

FIG 2

$r12 = \overline{nbll} \cdot r1 + nbll \cdot r2$

EP 0 705 458 B1

F I G 3

FIG 4

FIG 5

FIG 6

FIG 7